# EUROPEAN PATENT APPLICATION

(11) **EP 3 331 287 A1**
(43) Date of publication of application: **06.06.2018**
(21) Application number: 16306597.2
(22) Date of filing: 01.12.2016
(51) Int. Cl.: H04W 48/18, H04W 24/02, H04W 8/02, H04W 8/04, H04W 8/06, H04W 8/18, H04W 8/22, H04W 88/18, H04W 60/00

(54) **DEVICE AND METHOD FOR MANAGING A CELLULAR NETWORK IN RELATION WITH CELLULAR TERMINALS ACCEPTING A PLURALITY OF SUBSCRIBER MODULES**

(71) Applicant: Gemalto SA, 92190 Meudon (FR)
(72) Inventor: SAFFACHE, Philippe, 06560 Valbonne (FR); ANSLOT, Michel, 06250 Mougins (FR); BOUCKAERT, Philippe, 06410 Biot (FR)
(74) Representative: Hautier, Nicolas

(57) **Abstract**

A method, wherein a cellular terminal (CT) is configured so that several subscriber modules (SIM A,SIM B) can simultaneously be attached respectively to their corresponding voice cellular communication network (NV A,NV B), and only one among the subscriber modules (SIM A,SIM B) can be attached to its data cellular communication network (ND A,ND B), for detecting if the first subscriber module (SIM A) is selected or not for data cellular communication network access, comprising the steps of: checking for the reception of a first message emanating from a subscriber module (SIM A), from the first voice cellular communication network (NV A), checking for the reception of a second message emanating from the same subscriber module (SIM A), from the corresponding first data cellular communication network (ND A), and being similar to said first message, wherein said first subscriber module (SIM A) is considered being selected for data cellular communication network access if a second message is received either before the reception of said first message or after the reception of said first message but not later than a predetermined time duration after the reception of said first message and is considered not being selected if no second message is received before the expiration of said predetermined time duration.

## Description

### TECHNICAL FIELD OF THE INVENTION

The technical domain of the invention is the domain of cellular communication network management and particularly in relation with cellular terminals accepting simultaneously a plurality of subscriber modules, e.g., a plurality of SIM cards.

### STATE OF THE ART

Cellular communication networks mainly provide voice based services and data based services. Data revenues generation have been increasing dramatically whereas voice revenues generation are most often stagnating or even declining. To protect and develop these data revenues, a mobile operator operating a cellular communication network, must permanently offer a good quality of service. To do so, an operator must have data network resources properly tailored to the actual needs. To this purpose, a mobile operator is interested in obtaining information about the effective use of its data cellular communication network by its subscriber modules.

A cellular communication network, operated by a mobile operator, generally comprises a voice cellular communication network, offering voice services, and a data cellular communication network, offering data services. The voice and the data cellular communication networks are rather distinct for some technologies such as the one usually referred to as 3G that rely on the UMTS system.

Cellular terminal rights to attach to any one of these voice and/or data cellular communication networks and to use corresponding services are defined by a subscriber module delivered by a mobile operator, typically in the form of a microchip card or token that may be inserted in the cellular terminal. A subscriber module allows a cellular terminal to attach to a voice cellular communication network operated by said operator and/or to a data cellular communication network operated by the same operator.

A multi subscriber module cellular terminal is able to accommodate multiple, that is at least two, subscriber modules, each associated to a competing mobile operator, allowing thereby said cellular terminal to attach to any one of the corresponding voice cellular communication networks and/or data cellular communication networks.

These cellular terminals are often referred to as multi-SIM terminals.

These cellular terminals can simultaneously attach the two voice cellular communication networks of the two subscriber modules that it embeds. However, only one subscriber module at a time can attach to a data cellular communication network. Generally, the user of the cellular terminal makes the selection of the subscriber module that attaches a data cellular communication network, i.e., the user selects the data cellular communication network that he will use.

It is of particular relevance for a mobile operator to know if said selected data cellular communication network is its own network or not.

For instance, this information helps the operator to anticipate the resource utilization, especially the possible difference between the resources used for voice network and the resources used for data network. The operator is then able to properly dimension the data and voice networks and to enhance the allocation of equipment and resources according the actual subscribers' usage.

There is no solution that enables an operator to know whether a user of a cellular terminal has selected its data cellular communication network or the data cellular communication network of a competitor.

### SUMMARY OF THE INVENTION

Said problem is solved by the invention, which concerns a method in a cellular communication network comprising a voice cellular communication network (NV A) and a data cellular communication network (ND A), wherein a cellular terminal (CT) is configured to simultaneously operate with a first subscriber module (SIM A) and at least one second subscriber module (SIM B), the first subscriber module (SIM A) being able to attach to the first voice cellular communication network (NV A) to use voice services and to the first data cellular communication network (ND A) to use data services, the at least one second subscriber module (SIM B) being able to attach to a second voice cellular communication network (NV B) to use voice services and to a second data cellular communication network (ND B) to use data services, wherein the cellular terminal (CT) is configured so that the first and the second subscriber modules (SIM A,SIM B) can simultaneously be attached respectively to the first and second voice cellular communication networks (NV A,NV B) their corresponding voice cellular communication network (NV A,NV B), and only one among the first and second subscriber modules (SIM A,SIM B) can be attached to its data cellular communication network (ND A,ND B), for detecting if the first subscriber module (SIM A) is selected or not for data cellular communication network access.

The method comprises the following steps executed by at least one microprocessor:
- checking for the reception of or receiving at least a first message emanating from a subscriber module (SIM A), from the first voice cellular communication network (NV A), through a voice support node such as a mobile switch center node (MSC), comprised in the first voice cellular communication network (NV A),
- checking for the reception of at least a second message emanating from said first subscriber module (SIM A), from the first data cellular communication network (ND A), through a data support node, such as a serving GPRS support node (SGSN), comprised in the first data cellular communication network (ND A),
- if a second message is received either before the reception of said first message or after the reception of said first message but not later than a predetermined time duration after the reception of said first message, detecting that said first subscriber module (SIM A) is selected for data cellular communication network access in the first data cellular communication network (ND A), and
- if no second message is received before the expiration of said predetermined time duration, detecting that said first subscriber module (SIM A) is not being selected for data cellular communication network access in the first data cellular communication network (ND A).

Said detection advantageously allows a mobile operator to know whether the users that use its voice cellular communication network (NV A) also use its data cellular communication network (ND A). Therefore, the operator can properly tailor data network resources to the effective needs.

In addition, the method of the invention is transparent for the user. Indeed the user is not disturbed during his experience.

As an advantageous side effect, when an operator detects that a subscriber module has attached to its voice cellular communication network only and not to its data cellular communication network, it can send an offer message to said subscriber module to incite said subscriber module to change its selection toward the data cellular communication network of the operator.

The solution of the present invention is non-obvious. At most, starting from the known solutions a person skilled in the art could have used an approach where the mobile operator entices a user/cellular terminal to consume data resources, by asking him a question and/or sending him a message with a data link, and then monitors if data resources are then consumed from the operator's data cellular communication network. Since the user does not have to answer, this approach cannot guarantee a good enough success rate. In addition, said approach is intrusive which may be unpleasant for many users.

Optionally, the invention may comprise at least one of the following optional features that can be combined or taken separately:
- According to an embodiment, said predetermined time duration is measured by: starting a timer upon reception of a first message, if the first message is received before a second message, cancelling said timer upon possible reception of a second message.
- According to an embodiment, the first message is an update location request, such as carried by a MAP-Update-Location message and the second message is an update location request, such as carried by a MAP-Update-Location-GPRS message.
- According to an embodiment, at least said step of checking or said step of detecting whether said first subscriber module (SIM A) is selected or not is executed in a node common to the first voice cellular communication network (NV A) and to the first data cellular communication network (ND A). According to an embodiment, said node common to the first voice cellular communication network (NV A) and to the first data cellular communication network (ND A) is any one of : a home location register node (HLR), an intermediary home location register node (proxy HLR), a node receiving relevant information from any one of a home location register node (HLR) and intermediary home location register node (proxy HLR).
- According to an embodiment, the first message is a cellular terminal check, such as carried by a MAP-Check-IMEI message and the second message is a cellular terminal check, such as carried by a MAP-Check-IMEI message.
- According to an embodiment, wherein at least said step of detecting whether said first subscriber module (SIM A) is selected or not or said step of checking is executed in a node common to the first voice cellular communication network and to the first data cellular communication network.

Preferably said node is an equipment identity register node (EIR), an intermediary equipment identity register node (proxy EIR) and/or at least one node receiving relevant information from any one of an equipment identity register node (EIR) and an intermediary equipment identity register node (proxy EIR).
- According to an embodiment, a subscriber module is identified by a unique subscriber identifier, such as an international mobile subscriber identifier, said unique subscriber identifier being included in first message and in second message and the method further comprises the steps of retrieving said unique subscriber identifier from said first message and from said second message.
- According to an embodiment, the method further comprising the step of identifying that the cellular terminal (CT) is configured to simultaneously operate with a first subscriber module (SIM A) and at least one second subscriber module (SIM B) based on a unique terminal identifier, such as an international mobile equipment identifier (IMEI).
- According to an embodiment, said unique terminal identifier is included in said first message or in said second message and the method further comprises the step of retrieving said unique terminal identifier from either one of said first message or said second message,
- According to an embodiment, said unique terminal identifier is included neither in said first message nor in said second message and the method further comprises the step of fetching said unique terminal identifier out of a lookup table, based on a unique subscriber identifier, such as an international mobile subscriber identifier (IMSI), said unique subscriber identifier being included in the first message.
- According to an embodiment, the method further comprises, before said step of detecting whether said first subscriber module (SIM A) is selected or not, a step of populating said lookup table, for instance through receiving transiting cellular terminal checks.
- According to an embodiment, the method further comprising the step of sending a selecting information, indicating if a subscriber module is selected for data cellular communication network access of not, to a quality node in charge of tailoring data resources of said data cellular communication network,
- According to an embodiment, the method further comprises, once it has been detected that said first subscriber module (SIM A) is not being selected for data cellular communication network access in the first data cellular communication network (ND A), the step of sending a commercial offer to the cellular terminal upon detection of the subscriber module not being selected for data cellular communication network access, said commercial offer being preferably sent through the voice cellular communication network, and more preferably via short message service (SMS).

According to an embodiment, the invention also concerns a method wherein a device is configured to operate simultaneously with at least a first subscriber module (SIM A) and with a second subscriber module (SIM B):
o SIM A being able to attach a first voice cellular communication network (NV A) configured to transmit voice messages and a first data cellular communication network (ND A) configured to transmit data messages;
∘ SIM B being able to attach a second voice cellular communication network (NV B) configured to transmit voice messages and a second data cellular communication network (ND B) configured to transmit data messages;
wherein the device is configurable so that simultaneously:
∘ SIM A and SIM B are attached respectively to NV A and NV B,
∘ Only one among SIM A and SIM B is attached to a data cellular communication network configured to transmit data messages, respectively ND A and ND B;
the method comprising the following steps:
- in NV A: receiving a message originating from SIM A, said message comprising at least one identifier among any one of: a unique terminal identifier and a unique subscriber identifier;
- after receiving said message originating from SIM A and if no message originating from SIM A has been previously received in NV A:
   ∘ starting a timer with a predetermined time duration;
   ∘ in ND A: based on said identifier;
- if before the predetermined time duration lapses a message is received in ND A from SIM A, then identifying that the device is configured so that SIM A attaches simultaneously NV A and ND A;
- if when the predetermined time duration lapses no message is received in ND A from SIM A, then identifying that the device is configured so that SIM A attaches NV A and does not attach ND A.

According to an embodiment, the invention also concerns a device in a cellular communication network (NW A) comprising a voice cellular communication network (NV A) and a data cellular communication network (ND A), wherein a cellular terminal (CT) is configured to simultaneously operate with a first subscriber module (SIM A) and at least one second subscriber module (SIM B), the first subscriber module (SIM A) being able to attach to the first voice cellular communication network (NV A) to use voice services and to the first data cellular communication network (ND A) to use data services, the at least one second subscriber module (SIM B) being able to attach to a second voice cellular communication network (NV B) to use voice services and to a second data cellular communication network (ND B) to use data services, wherein the cellular terminal (CT) is configured so that the first and the second subscriber modules (SIM A,SIM B) can simultaneously be attached respectively to the first and second voice cellular communication networks (NV A,NV B) their corresponding voice cellular communication network (NV A,NV B), and only one among the first and second subscriber modules (SIM A,SIM B) can be attached to its data cellular communication network (ND A,ND B), for detecting if the first subscriber module (SIM A) is selected or not for data cellular communication network access.

The device comprises:
- a first checker arranged to check the reception of or arranged to receive at least a first message emanating from a subscriber module (SIM A), from the first voice cellular communication network (NV A), through a voice support node such as a mobile switch center node (MSC), comprised in the first voice cellular communication network (NV A),
- a second checker arrange to check for the reception of at least a second message emanating from said first subscriber module (SIM A), from the first data cellular communication network (ND A), through a data support node, such as a serving GPRS support node (SGSN), comprised in the first data cellular communication network (ND A),
the device being configured to detect that said first subscriber module (SIM A)
- is: selected for data cellular communication network access in the first data cellular communication network (ND A) if a second message is received either before the reception of said first message or after the reception of said first message but not later than a predetermined time duration after the reception of said first message, and
- is not being selected for data cellular communication network access in the first data cellular communication network (ND A) if no second message is received before the expiration of said predetermined time duration.

According to an embodiment, the invention relates to a computer-program product stored on a non-transitory computer readable medium that contains software program instructions, where execution of the software program instructions by at least one data processor results in performance of operations that comprise execution of at least the following steps:
- checking for the reception of or receiving at least a first message emanating from a subscriber module (SIM A), from the first voice cellular communication network (NV A), through a voice support node such as a mobile switch center node (MSC), comprised in the first voice cellular communication network (NV A),
- checking for the reception of at least a second message emanating from said first subscriber module (SIM A), from the first data cellular communication network (ND A), through a data support node, such as a serving GPRS support node (SGSN), comprised in the first data cellular communication network (ND A),

- detecting that said first subscriber module (SIM A):
   - is selected for data cellular communication network access in the first data cellular communication network (ND A) if a second message is received either before the reception of said first message or after the reception of said first message but not later than a predetermined time duration after the reception of said first message, and
   - is not being selected for data cellular communication network access in the first data cellular communication network (ND A) if no second message is received before the expiration of said predetermined time duration.

### BRIEF DESCRIPTION OF THE FIGURES

Others features, details and advantages of the invention will become more apparent from the detailed illustrating description given hereafter with respect to the drawings on which:
- figure 1 shows a user using a multi subscriber module cellular terminal attaching to two cellular communication networks,
- figure 2 shows the principle of cellular terminal check,
- figure 3 shows a flow chart illustrating the interactions between a subscriber module and a cellular communication network, according to a first embodiment,
- figure 4 shows a flow chart illustrating the interactions between a subscriber module and a cellular communication network, according to a second embodiment,
- figure 5 illustrates some features of a device according to a non-limitative embodiment of the invention.

### DETAILED DESCRIPTION

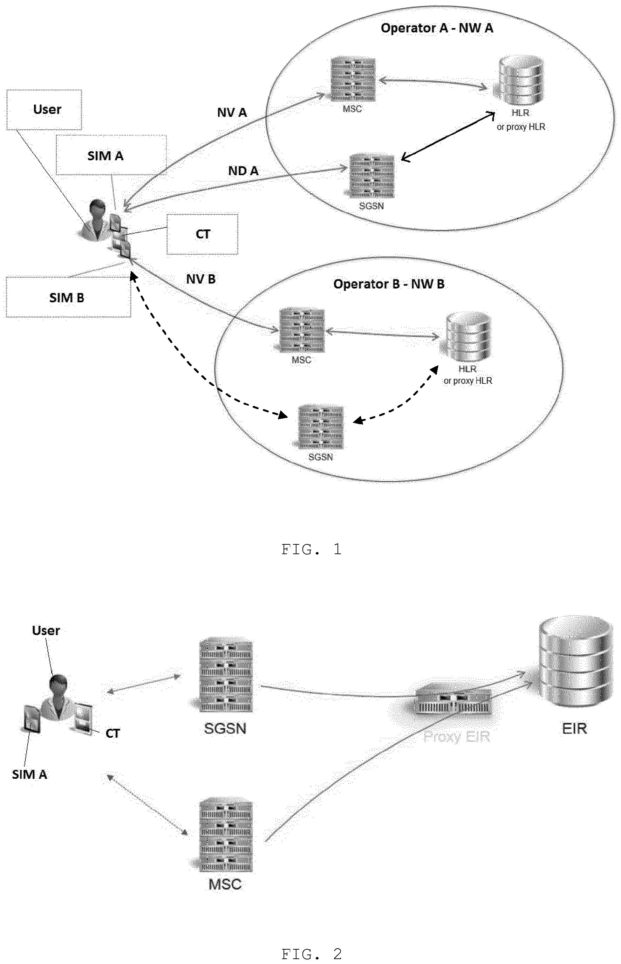

According to figure 1, a multiple subscriber module cellular terminal CT, typically associated to a user, comprises and uses at least two subscriber modules: subscriber module A and subscriber module B. Each subscriber module A,B, is typically a microchip card containing, among others, the necessary identifiers and codes. For instance such subscriber module can be a subscriber identifier module, often referred to as its acronym SIM or a token. In the present description the acronym "SIM" will be used although the subscriber module can be of a type different from a SIM.

Subscriber module SIM A is provided by a first operator A, managing a first cellular communication network NW A. Thus, subscriber module SIM A allows the cellular terminal CT to attach to the two networks comprised in said cellular communication network NW A: a voice cellular communication network NV A, so as to access to voice services, and a data cellular communication network ND A, so as to access to data services.

Similarly, subscriber module SIM B is provided by a second operator B, managing a second cellular communication network NW B. Thus, subscriber module SIM B allows the cellular terminal CT to attach to the two networks comprised in said cellular communication network NW B: a voice cellular communication network NV B and a data cellular communication network ND B.

Generally, a multiple cellular terminal CT can attach simultaneously to as many voice cellular communication networks as possible, up to the number of subscriber modules it uses. However, at a given moment, a cellular terminal CT can only attach to a single data cellular communication network. Said single subscriber module/operator/network selected for data access, is usually chosen by the user, typically by configuring the cellular terminal CT.

In the exemplary use case depicted on figure 1, the user has selected the data cellular communication network ND A for data services. On figure 1, the flow of messages between SIM A and the elements of ND A (SGSN and HLR or proxy HLR of operator A) are illustrated by arrows in solid lines, whereas the absence of messages between SIM B and the elements of ND B (SGSN and HLR or proxy HLR of operator B) is illustrated by arrows with dotted lines. Since the cellular terminal enables simultaneously to attach both voice communication cellular communication networks NV A and NV B, the flow of messages between SIM A and the elements of NV A and the flow of messages between SIM B and the elements of NV B are illustrated by arrows in solid lines.

In order to detect which among the multiple subscriber modules is effectively selected for data access, the invention is based on comparing similar messages coming respectively from a voice cellular communication network NV A and from a data cellular communication network ND A managed by a same mobile operator. When a message coming from a voice cellular communication network NV A, associated to a given subscriber module SIM A, is received, it is tested whether or not a similar message coming from a data cellular communication network, associated to the same subscriber module SIM A, exists. If it exists, subscriber module SIM A is considered to be attached to cellular communication network NW A for both voice access and data access, that is, subscriber module SIM A is attached to voice cellular communication network NV A and to data cellular communication network ND A. If no similar message can be found, thus the subscriber module SIM A is considered to be attached to cellular communication network NW A for voice access only, that is subscriber module SIM A is attached only to voice cellular communication network NV A.

The term similar for the messages must be understood here as referring to a same or a similar operation, one for the voice cellular communication network NV A and one for the data cellular communication network ND A of the same cellular communication network NW A. So two similar messages may have different names and/or syntaxes but are intended to get the same results. Two illustrative examples of such similar messages will be given later on, with an update location request and with a cellular terminal check.

According to figure 1, 3 or 4, a cellular terminal CT interacts with at least one cellular communication network NW A, comprising several nodes: mobile switch center node MSC, serving General Packet Radio Service support center node SGSN, intermediary home location register node proxy HLR, home location register node HLR, intermediary equipment identity register proxy EIR, equipment identity register EIR, ..., said list being non-limitative.

A mobile switch center node MSC, is a support node allowing a cellular terminal CT to attach to a voice cellular communication network NV A so as to access voice services of the cellular communication network NW A.

A serving General Packet Radio Service (GPRS) support center node SGSN, is a support node allowing a cellular terminal CT to attach to a data cellular communication network ND A so as to access data services of the cellular communication network NW A.

A home location register node HLR is a node managing subscriber modules.

An intermediary home location register node proxy HLR is an optional intermediary node either locally acting on behalf of the home location register node HLR or bridging with said home location register HLR.

An equipment identity register EIR is a node managing equipments/cellular terminals CT.

An intermediary equipment identity register node proxy EIR is an optional intermediary node either locally acting on behalf of the equipment identity register node EIR or bridging with said equipment identity register EIR.

The cellular communication network NW A is configured to provide voice, through its voice cellular communication network NV A, and data services, through its data cellular communication network ND A. Accordingly, some nodes are dedicated to voice services only and belong to the voice cellular communication network NV A, e.g. MSC, some nodes are dedicated to data services only and belong to data cellular communication network ND A, e.g. SGSN, while some nodes are general purpose ones, e.g. HLR, proxy HLR, EIR, proxy EIR. Said general purpose nodes can communicate with voice dedicated nodes and data dedicated nodes.

The skilled person would easily complement the list of nodes and equipment illustrated in Figure 1 to have and a complete voice cellular communication network NV A and a complete data cellular communication network ND A. For instance equipments such as base transceiver station (BTS), base station controller (BSC), routing tables are not illustrated for sake of clarity.

The aim of the invention is to detect if a subscriber module SIM A, used in a cellular terminal CT, is, or not, selected for data network access. To do so, the general principle, is to focus on a given message, assuming that such a message (referred to as "first message") exists for voice services and a similar corresponding message (referred to as "second message") exists for data services.

If a second message, a "data message", is received from a data cellular communication network, associated to a subscriber module SIM A, it indicates subscriber module SIM A has been used to access data network. This means subscriber module SIM A has been selected to access data network and also indicates the associated data cellular communication network ND A of operator A is selected for data network access.

Accordingly when a first message, a "voice message", is received from a corresponding voice cellular communication network, associated to a subscriber module SIM A, it is checked whether or not a similar corresponding second message, associated to the same subscriber module SIM A, is also received, either before the reception of said first message, or after the reception of said first message. In order to be able to make a decision not too long after the reception of the first message, only a limited lapse of time is allowed for the second message to be received, after what the second message is considered to be missing.

The typical lapse of time allowed here must be long enough to cope with a possible delay between a voice attachment and a data attachment, but short enough to get a decision. It is typically comprised between 5 ms (10⁻³ seconds) and 4 s (seconds) and preferably between 10 ms and 2 s and preferably between 20 ms (10⁻³ seconds) and 1.5 s .

Thus, if the second message is received first, that is before the first message, subscriber module SIM A is considered being selected for data network access.

If the first message is received first, that is before the second message, said lapse of time is considered. If the second message is received before the expiration of said lapse of time, subscriber module SIM A is considered being selected for data network access. At the expiration of said lapse of time, the second message is no longer waited and is considered absent. Subscriber module SIM A is then considered not being selected for data network access. The decision can be made either when the second message is received or at expiration of the lapse of time.

To do so, a method comprises the following steps. Two checking steps are paralleled. A first checking step checks for the reception of a first message from a subscriber module SIM A from the voice cellular communication network NV A, that is, through a voice support node. A voice support node can be any node belonging to the voice cellular communication network NV A. Such a node can be e.g. a mobile switch center node MSC, since such a MSC node is intended to interface a cellular terminal CT and its subscriber module SIM A with the voice cellular communication network NV A. Of course, additional convention nodes and equipments (BTS, BSC, routing tables etc.) can be used to achieve this interface. Since said first message is received from a voice cellular communication network, emanating from subscriber module SIM A, it is certainly received through said voice support node.

The second checking step checks for the reception of a second message from a subscriber module SIM A from the data cellular communication network ND A, that is, through a data support node. A data support node can be any node belonging to the data cellular communication network ND A. Such a node can be e.g. a serving GPRS support node SGSN, since such a SGSN node is intended to interface a cellular terminal CT and its subscriber module SIM A with the data cellular communication network ND A. Of course, additional convention nodes and equipments (BTS, BSC, routing tables etc.) can be used to achieve this interface. Since said second message is received from a data cellular communication network, emanating from subscriber module SIM A, it is certainly received through said data support node.

Said first subscriber module SIM A is considered being selected for data cellular communication network access if the second message is received either before the reception of said first message or after the reception of said first message but not later than a predetermined time duration after the reception of said first message and is considered not being selected if no second message is received before the expiration of said predetermined time duration.

A timer CLK is advantageously used to measure said lapse of time. The method starts said timer CLK upon reception of said first message, as detected by the first checking step, and cancels it upon possible reception of said second message, if it has been detected by the second checking step. Timer CLK is needed when the first message is received first. When second message is received first, timer CLK is not needed. It may either not being used or it can be started and cancelled immediately.

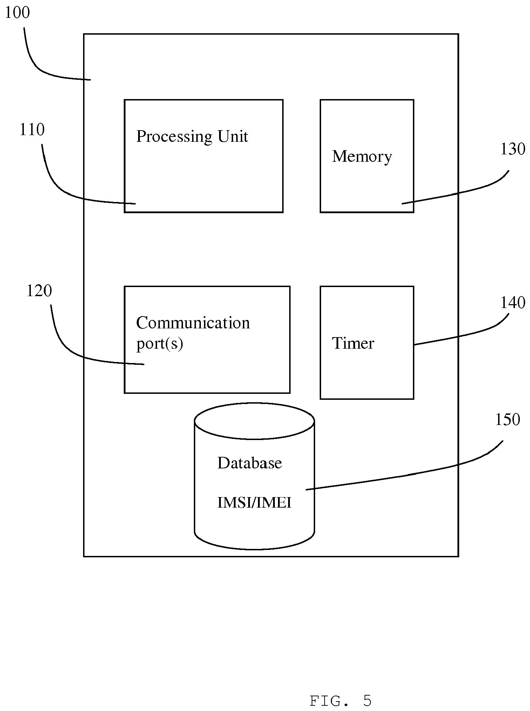

The device of the invention preferably comprises a processing unit able to take the decision depending on the different events: date of reception of the first message, date of reception of the second message, start, cancellation and/or expiration of the timer CLK. An example of processing unit is illustrated on figure 5.

As an example of a message meeting the previously described conditions, an update location request can be used. Such a message is intended to update the location of a subscriber module SIM A and/or cellular terminal CT when it appears again to the cellular communication network NW A, that is when said subscriber module SIM A attaches to either one of the voice or data cellular communication network. Said operation is managed in relation with the home location register HLR that maintains a database of subscriber modules and their respective locations. Said operation advantageously exists for both attachments, that is, for both the voice cellular communication network NV A and the data cellular communication network ND A. Such an update location request may e.g. be carried by a MAP-Update-Location message for the voice cellular communication network NV A, and thus for the first message, and e.g. be carried by a MAP-Update-Location-GPRS message for the data cellular communication network ND A, and thus for the second message. These two messages have slightly different names but ensures the same functions. In the present invention they can then be considered similar.

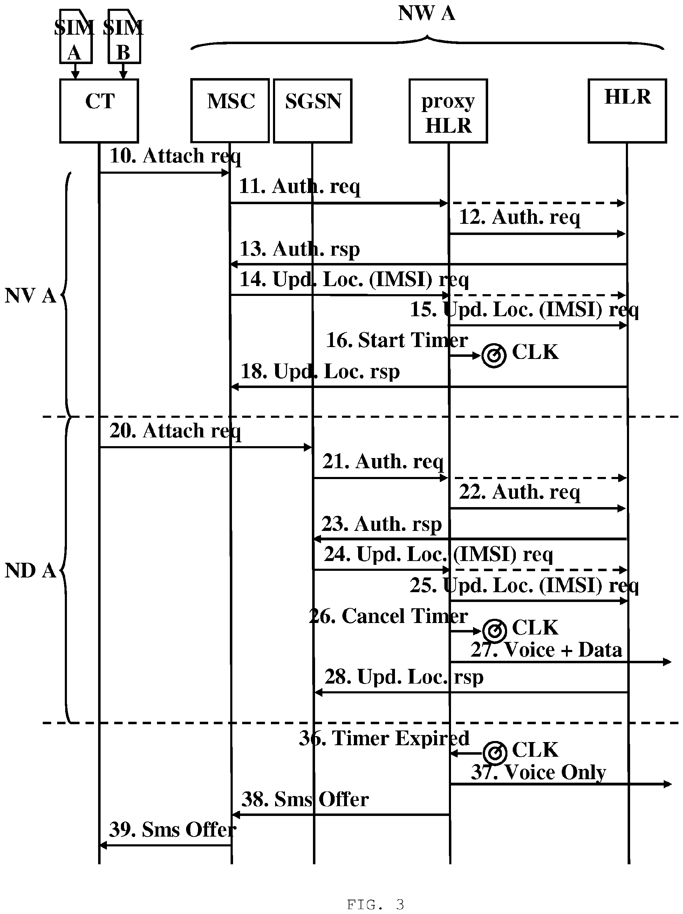

An embodiment using update location requests is illustrated in figure 3. The upper part details voice services operations managed mainly in the voice cellular communication network NV A, while the lower part details data services operations managed mainly in the data cellular communication network ND A. A cellular terminal CT approaches a cell and enters its radio range. It is then able to communicate with the cellular communication network NW A through said cell. The cellular terminal CT may attach to voice cellular communication network NV A and/or to data cellular communication network ND A.

If the cellular terminal CT attaches to the voice cellular communication network NV A, it sends an attach request 10 to the MSC node. The MSC node then sends an authentication request 11 to the HLR node. Said HLR node may comprise an authentication module (AuC) that ensures authentication steps.

If said cellular terminal CT with its subscriber module SIMA is allowed on said voice cellular communication network NV A, the HLR node answers with an authentication response 13. Dialog between the MSC node and the HLR node can be direct as illustrated by the dotted arrow extending arrow 11. Alternatively it can be relayed by at least one intermediary node referred as proxy HLR node.

A proxy HLR node acts as an HLR node toward a cellular terminal CT. It either duplicates the HLR node or it transmits all messages to and from the HLR node. Any message transiting through a proxy HLR is either transparently transmitted, as figured by the prolonged arrow for message 11 or for message 14 (the HLR node acting thereby as a mere probe) or is replicated as figured by the message 12 identically replicating the message 11. In both cases, it can be noted that the proxy HLR node has access to all the messages and their contents transiting through it.

The attachment process goes on with the MSC node sending an update location request 14 to the HLR node. Here again, exchanges between the MSC node and the HLR node can be either direct or can be relayed by at least one proxy HLR node, thus producing at least one update location request 15, replicating the update location request 14. The voice attachment process ends, with the HLR node answering to the MSC node with at least one update location response 18. The cellular terminal CT is then attached to the voice cellular communication network NV A and can use the voice services.

Any one of the update location requests 14,15 can here be used as a first message. It is supposed here, that the first message is received first. Accordingly, the timer CLK is started 16 upon reception of said first message.

According to another embodiment, it is also possible that messages 11 or 12 triggers the timer, instead of messages 14, 15. These messages are the same on both networks, but the system can differentiate them by checking the calling node e.g. by checking a table containing the node type (MSC or SGSN for instance).

It should be noticed that all previous steps are advantageously conventional steps for an attachment phase in a 3G network. The only potential difference is the possible presence of the proxy HLR, the processing of said first message and the triggering 16 of the timer CLK.

If the cellular terminal CT attaches to data cellular communication network ND A, it sends an attach request 20 to the SGSN node. The SGSN node then sends an authentication request 21 to the HLR node. If said cellular terminal CT with its subscriber module SIM A is allowed on said data cellular communication network ND A, the HLR node answers with an authentication response 23. As for the MSC node, dialog between the SGSN node and the HLR node can be direct as illustrated by the dotted arrow extending arrow 21. Alternatively, it can be relayed by at least one proxy HLR node.

Any message transiting through a proxy HLR is either transparently transmitted, as figured by the prolonged arrow for message 21 or for message 24 or is replicated as figured by the message 22 identically replicating the message 21. In both cases, it can be noted that the proxy HLR node has access to all the messages and their contents transiting through it.

The attachment process goes on with the SGSN node sending an update location request 24 to the HLR node. Here again, exchanges between the SGSN node and the HLR node can be either direct or can be relayed by at least one proxy HLR node, thus producing at least one update location request 25, replicating the update location request 24.

The data attachment process ends, with the HLR node answering to the SGSN node with at least one update location response 28. The cellular terminal CT is then attached to the data cellular communication network ND A and can use the data services.

Any one of the update location requests 24,25 can here be used as a second message.

According to another embodiment, it is also possible that messages 21 or 22 triggers the timer, instead of messages 24, 25. These messages are the same on both networks, but the system can differentiate them by checking the calling node e.g. by checking a table containing the node type (MSC or SGSN for instance).

Since the first message has been received first, the timer CLK is cancelled 26 upon reception of the second message. This indicates that said subscriber module SIM A is used for both voice and data. The selecting information so obtained can be transmitted, as indicated by operation 27, to e.g. a quality node in charge of tailoring data resources.

It should be noticed that all previous steps are advantageously conventional steps for an attachment phase in a 3G network. The only potential differences are the possible presence of the proxy HLR, the processing of said second message, the cancelling 26 of the timer CLK and operation 27.

The above mentioned steps are schematically depicted on figure 1. The operator A identifies that SIM A is selected for voice and data services on NV A and ND A. This is illustrated by arrows made of solid lines that go from SIM A to the HLR or proxy HLR of operator A.

SIM B attaches the voice cellular communication network NV B of Operator B as illustrated by arrows made of solid lines that go from SIM B to the HLR or proxy HLR of operator B. However, SIM B does no attach the data cellular communication network NV D of Operator B as illustrated by arrows made of dotted lines that go from SIM B to the HLR or proxy HLR of operator B.

If, alternately, the cellular terminal CT does not attach to data cellular communication network ND A, operations 20-28 are not present. Since no update location request can be received from the SGSN node, the timer CLK finally expires 36. This indicates said subscriber module SIM A is not used for data but only for voice. The selecting information so obtained can be transmitted, as indicated by operation 37, to e.g. a quality node in charge of tailoring data resources.

The method can be hosted anywhere, in one or several nodes of the cellular communication network NW A, provided the necessary relevant information, including the content of the first message and the second message are communicated to it so it can make a decision. However, the HLR node is an advantageous location since both the first message and the second message are transmitted to said HLR node. Accordingly, any of the possible proxy HLR nodes used to transmit both the first message and the second message is also an advantageous location since both the first message and the second message are transmitted through said proxy HLR node. In case the method is not hosted in the HLR node or in a proxy HLR node, any node among the HLR node and the proxy HLR nodes, can advantageously be in charge of collecting said relevant information and to transmit it to execute the method of the invention.

As another example of a message meeting the previously described conditions, a cellular terminal check can be used. Such a check is part of a process intended to protect cellular terminals against robbery, and more particularly illustrated in figure 2. This is done by regularly checking a cellular terminal CT against a list of robbed cellular terminals, such a list being often referred to as a black list.

Said process is managed in relation with the equipment identity register EIR node that maintains said list of robbed cellular terminals. Here again, said process exists for both voice cellular communication network NV A and data cellular communication network ND A. Once a cellular terminal CT is attached to a voice cellular communication network, eg. through a MSC node, said MSC node regularly communicates with the EIR node, possibly through a proxy EIR. Similarly, once a cellular terminal CT is attached to a data cellular communication network, eg. through a SGSN node, said SGSN node regularly communicates with the EIR node, possibly through a proxy EIR. The regularity of this check depends on regulations rules that largely vary according to the national regulatory entities. Thus, these checks may be done at each consumption of voice or data service or on a timely basis, e.g. each x minute, hour or day for instance. The purpose of said communications is to check the currently attached cellular terminal CT against the black list stored in the EIR node or accessible to the EIR node. Such a cellular terminal check may e.g. be carried by a MAP-Check-IMEI for the voice cellular communication network NV A, and thus for the first message, and e.g. be carried by a MAP-Check-IMEI message for the data cellular communication network ND A, and thus for the second message. These two messages have the same names and do the same function. They can then be considered similar.

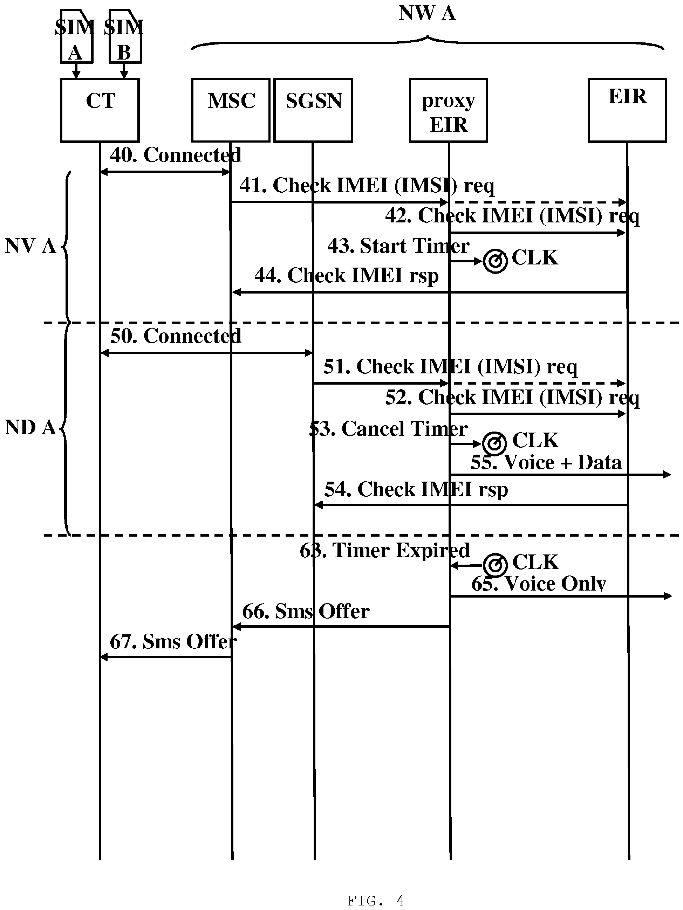

An alternate or complementary embodiment using cellular terminal check is illustrated in figure 4.

Here, the cellular terminal CT is supposed to be already attached to the voice cellular communication network NV A, as indicated by the arrow connected 40. In order to check the cellular terminal CT, the MSC node sends a cellular terminal check 41 to the EIR node. Depending on the cellular terminal CT being or not in the terminal black list, the EIR node answers with a cellular terminal check response 44. Dialog between the MSC node and the EIR node can be direct as illustrated by the dotted arrow extending the arrow 41 made of a solid line. Either it can be relayed by at least one intermediary node referred as proxy EIR node. A proxy EIR node acts as an EIR node toward a cellular terminal CT. Any message transiting through a proxy EIR is either transparently transmitted, as figured by the prolonged arrow for message 41 or is replicated as figured by the message 42 identically replicating the message 41. In both cases, it can be noted that the proxy EIR node has access to all the messages and their contents transiting through it.

Any one of the cellular terminal checks 41,42 can here be used as a first message. It is supposed here, that said first message is received first. Accordingly, the timer CLK is started 43 upon reception of the first message.

All previous steps are advantageously conventional steps of a terminal identifier check procedure in a 3G network. The only potential differences are the possible presence of the proxy EIR, the processing of said first message, the triggering 43 of the timer CLK.

We now consider the data part. If the cellular terminal CT is attached to the data cellular communication network ND A, the attachment process has already been applied. This is indicated by arrow connected 50. In order to check the cellular terminal CT, the SGSN node sends a check IMEI 51 to the EIR node. Depending on the cellular terminal CT being or not in the robbed terminals list, the EIR node answers with a response 54. Dialog between the SGSN node and the EIR node can be direct as illustrated by the dotted arrow extending arrow 51. Either it can be relayed by at least one intermediary node referred as proxy EIR node. Any message transiting through a proxy EIR is either transparently transmitted, as figured by the prolonged arrow for message 51 or is replicated as figured by the message 52 identically replicating the message 51. In both cases, it can be noted that the proxy EIR node has access to all the messages and their contents transiting through it.

Any one of the cellular terminal checks 51,52 can here be used as a second message. Since the first message has been received first, the timer CLK is cancelled 53 upon reception of the second message. This indicates that said subscriber module SIM A is used for both voice and data. The selecting information so obtained can be transmitted, as indicated by operation 55, to e.g. a quality node in charge of tailoring data resources.

Advantageously all previous steps are conventional steps of a terminal identifier check procedure in a 3G network. The only potential differences are the possible presence of the proxy EIR, the processing of said second message, the cancelling 53 of the timer CLK and operation 55.

If, alternately, the cellular terminal CT is not attached to data cellular communication network ND A, operations 50-54 are not present. Since no cellular terminal check can be received from SGSN node, the timer CLK finally expires 63. This indicates that said subscriber module SIM A is not used for data but only for voice. The selecting information so obtained can be transmitted, as indicated by operation 65, to e.g. a quality node in charge of tailoring data resources.

The method can be hosted anywhere, in one or several nodes of the cellular communication network NW A, provided the necessary relevant information, including the content of the first message and the second message are communicated to it so it can make a decision. However the EIR node is an advantageous location since both the first message and the second message are transmitted to said EIR node. Accordingly, any of the possible proxy EIR nodes used to transmit both the first message and the second message is also an advantageous location since both the first message and the second message are transmitted through said proxy EIR node. In case the method is not hosted in EIR node or in a proxy EIR node, any node among the EIR node and the proxy EIR nodes, can advantageously be in charge of collecting said relevant information and to transmit it to execute the method of the invention.

In order to verify that both a first message and a second message emanate from the same subscriber module SIM A, subscriber modules are advantageously identified each by a unique subscriber identifier. One possible unique subscriber identifier can be an international mobile subscriber identifier or IMSI. Advantageously, said unique subscriber identifier is included in the first message and in the second message. The method can then retrieve said unique subscriber identifier from said first message and from said second message. The method is then able to compare any two messages and to determine if they can be associated to the same subscriber module SIM A.

The method can be applied to determine which among multiple subscriber modules SIM A, SIM B is the single one subscriber module selected for data network access. The method, when applied by an operator, allows it to know if said unique attached data cellular communication network is its own.

In order to apply the invention preferably to multiple subscriber module cellular terminals CT, the device 100 must be able to detect such a cellular terminal CT. This may e.g. be done from a unique terminal identifier, such as an international mobile equipment identifier IMEI. Said IMEI either directly contains/codes a multiple subscriber module attribute of its associated cellular terminal CT or said IMEI is compared to a database mentioning said multiple subscriber module attribute.

According to a first embodiment, the unique terminal identifier is included in said first message or in said second message. Then the method retrieves said unique terminal identifier from either one of said first message or said second message.

This is the case e.g. in the use case of figure 4 using cellular terminal checks. Since a cellular terminal check uses a unique terminal identifier, typically said IMEI, to identify robbed cellular terminals, a cellular terminal check contains said unique terminal identifier.

According to an alternate embodiment, the unique terminal identifier is included neither in said first message nor in said second message. Thus, the method must proceed differently to obtain said unique terminal identifier, e.g. by fetching a lookup table. Such a lookup table can e.g. be a table pairing a unique terminal identifier with its associated at least one unique subscriber identifier.

Such a lookup table can be pre-existent in relation with the cellular terminal check protocol, as maintained by the EIR node. Alternately, it can be created and populated, e.g. by the method itself, out of spying transiting cellular terminal checks. A cellular terminal check advantageously comprises both a unique terminal identifier e.g. in the form of an IMEI, and at least one unique subscriber identifier e.g. in the form of an IMSI.

This is the case e.g. in the use case of figure 3 using update location requests. An update location request generally does contain neither a unique terminal identifier nor an IMEI. Instead, it contains a unique subscriber identifier of the subscriber module, in the form of an IMSI. Said IMSI can be used to retrieve the IMEI.

The result of the invention, namely selecting information, indicates if a subscriber module SIM A is selected for data network access (voice + data) of not (voice only). Said selecting information can be sent 27,37,55,65 to another node, e.g. a quality node in charge of tailoring data resources of the cellular communication network NW A.

Additionally, when detecting subscriber module SIM A is not selected for data network access, the method can further send a commercial offer 38,39,66,67 to cellular terminal CT, to the attention of its user, in order to incite him to select a data network access through data cellular communication network ND A. Such a commercial offer must be sent through the voice attachment, so advantageously via a text messaging services offered by the voice cellular communication network such a SMS (short message service).

The invention further concerns a corresponding device 100 able to execute said method.

Figure 5 illustrates a non-limitative embodiment of such device 100. The device 100 is preferably a node of the network NV A and/or the network ND A.

The device 100 preferably comprises at least a communication port 102 to enable communication with other nodes of the networks NV A and ND A. The device 100 also comprises at least a memory 130 and the timer 140.

In addition the device 100 can comprise a database 150, for instance a database that enables to retrieve the IMEI of a cellular terminal based on the IMSI of a subscriber module used by this cellular terminal CT. Alternatively, this database 150 is distinct from the device and can be accessed by the device 100 or by other nodes.

The device 100 also comprises at least a processing unit 110 comprising at least a processor and configured to execute at least some of the steps of the method and to control the operation of the communication ports 120, the memory 130, the timer 140, the database 150 etc.

If the device 100 is a communication node, for instance a HLR, a proxy HLR, an EIR, or a proxy EIR, it will of course comprise additional features that are conventionally integrated in these communication nodes.

The device 100 can be managed by the operator of NV A and ND A. Alternatively the device 100 can be managed by a third party on behalf of the operator of NV A and ND A. This embodiment is particularly advantageous when the device 100 acts as a probe and is different from communication nodes such as a HLR or a EIR, i.e. when the device 100 only "listens" and retrieves the information (such as IMSI and IMEI) of messages that transit on these networks without interfering with the conventional flows of service message.

While there is shown and described the present preferred embodiment of the invention, it is to be distinctly understood that this invention is not limited thereto but may be variously embodied to practice within the scope of the following claims.

For instance, while the above non-limitative examples describe a cellular terminal CT that can operate with two subscriber modules simultaneously, the scope of the invention extends to cellular terminals CT that can operate with more than two subscriber modules simultaneously.

## Claims

1. A method in a cellular communication network (NW A) comprising a voice cellular communication network (NV A) and a data cellular communication network (ND A), wherein a cellular terminal (CT) is configured to simultaneously operate with a first subscriber module (SIM A) and at least one second subscriber module (SIM B), the first subscriber module (SIM A) being able to attach to NV A to use voice services and to ND A to use data services, the at least one second subscriber module (SIM B) being able to attach to a second voice cellular communication network (NV B) to use voice services and to a second data cellular communication network (ND B) to use data services, wherein the cellular terminal (CT) is configured so that the first and the second subscriber modules (SIM A,SIM B) can simultaneously be attached respectively to NV A and NV B, and only one among the first and second subscriber modules (SIM A,SIM B) can be attached to respectively ND A and ND B, ***characterized in that*** the method comprises the following steps executed by at least one microprocessor:
- receiving at least a first message (11, 12, 14, 15, 41, 42) emanating from a subscriber module (SIM A), from NV A, through a voice support node such as a mobile switch center node (MSC) comprised in NV A,
- checking for the reception of at least a second message (21, 22, 24, 25, 51, 52) emanating from said first subscriber module (SIM A), from ND A, through a data support node such as a serving GPRS support node (SGSN) comprised in ND A,
- detecting that said first subscriber module (SIM A):
∘ is:selected for data cellular communication network access in ND A if a second message is received either before the reception of said first message or after the reception of said first message but not later than a predetermined time duration after the reception of said first message, and
∘ is not being selected for data cellular communication network access in ND A if no second message is received before the expiration of said predetermined time duration.

2. The method of the preceding claim, wherein said predetermined time duration is measured by:
- starting a timer (CLK) upon reception of a first message, if the first message is received before a second message,
- cancelling said timer (CLK) upon possible reception of said second message.

3. The method of any one of the preceding claims, wherein the first message (11, 12) is an update location request (14,15), such as carried by a MAP-Update-Location message, and the second message is an update location request (24,25), such as carried by a MAP-Update-Location-GPRS message.

4. The method of any one of the preceding claims, wherein at least said step of checking or said step of detecting whether said first subscriber module (SIM A) is selected or not is executed in a node common to the first voice cellular communication network (NV A) and to the first data cellular communication network (ND A) and wherein said node common to the first voice cellular communication network (NV A) and to the first data cellular communication network (ND A) is preferably any one of : a home location register node (HLR), an intermediary home location register node (proxy HLR), a node receiving relevant information from any one of a home location register node (HLR) and intermediary home location register node (proxy HLR).

5. The method of any one of the preceding claims, wherein the first message is a cellular terminal check (41,42), such as carried by a MAP-Check-IMEI message and the second message is a cellular terminal check (51,52), such as carried by a MAP-Check-IMEI message.

6. The method of any one of the preceding claims, wherein at least said step of detecting whether said first subscriber module (SIM A) is selected or not or said step of checking is executed in a node common to the first voice cellular communication network (NV A) and to the first data cellular communication network (ND A), preferably an equipment identity register node (EIR), an intermediary equipment identity register node (proxy EIR) and/or at least one node receiving relevant information from any one of an equipment identity register node (EIR) and an intermediary equipment identity register node (proxy EIR).

7. The method of any one of the preceding claims, wherein a subscriber module (SIM A) is identified by a unique subscriber identifier, such as an international mobile subscriber identifier (IMSI), said unique subscriber identifier being included in the first message (14,15,41,42) and in the second message (24,25,51,52) and the method further comprises the steps of retrieving said unique subscriber identifier from said first message (14,15,41,42) and from said second message(24,25,51,52).

8. The method of any one of the preceding claims, further comprising the step of identifying that the cellular terminal (CT) is configured to simultaneously operate with a first subscriber module (SIM A) and at least one second subscriber module (SIM B) based on a unique terminal identifier, such as an international mobile equipment identifier (IMEI).

9. The method of claim 8, wherein said unique terminal identifier is included in said first message (11, 12, 14, 15, 41, 42) or in said second message (21, 22, 24, 25, 51, 52) and the method further comprises the step of retrieving said unique terminal identifier from either one of said first message or said second message.

10. The method of claim 8, wherein said unique terminal identifier is included neither in said first message (11, 12, 14, 15, 41, 42) nor in said second message (21, 22, 24, 25, 51, 52) and wherein the method further comprises the step of fetching said unique terminal identifier out of a lookup table, based on a unique subscriber identifier, such as an international mobile subscriber identifier (IMSI), said unique subscriber identifier being included in the first message (11, 12, 14, 15, 41, 42) and in the second message (21, 22, 24, 25, 51, 52)

11. The method of the preceding claim, further comprising, before said step of detecting whether said first subscriber module (SIM A) is selected or not, a step of populating said lookup table, for instance through receiving transiting cellular terminal checks.

12. The method of any one of the preceding claims, further comprising the step of sending a selecting information, indicating if said first subscriber module (SIM A) is selected for data cellular communication network access or not, to a quality node in charge of tailoring data resources of said data cellular communication network (ND A).

13. The method of any one of the preceding claims, further comprising, once it has been detected that said first subscriber module (SIM A) is not being selected for data cellular communication network access in the first data cellular communication network (ND A), the step of sending a commercial offer to the cellular terminal (CT), said commercial offer being preferably sent through the voice cellular communication network (NV A), and more preferably via short message service (SMS).

14. Computer-program product stored on a non-transitory computer readable medium that contains software program instructions, where execution of the software program instructions by at least one data processor results in performance of operations that comprise execution of the method according to any of the preceding claims.

15. A device (100) in a cellular communication network (NW A) comprising a voice cellular communication network (NV A) and a data cellular communication network (ND A), wherein a cellular terminal (CT) is configured to simultaneously operate with a first subscriber module (SIM A) and at least one second subscriber module (SIM B), the first subscriber module (SIM A) being able to attach to NV A to use voice services and to ND A to use data services, the at least one second subscriber module (SIM B) being able to attach to a second voice cellular communication network (NV B) to use voice services and to a second data cellular communication network (ND B) to use data services, wherein the cellular terminal (CT) is configured so that the first and the second subscriber modules (SIM A,SIM B) can simultaneously be attached respectively to NV A and NV B, and only one among the first and second subscriber modules (SIM A,SIM B) can be attached to respectively ND A and ND B, ***characterized in that*** it comprises:
- a first checker arranged to check the reception of or arranged to receive at least a first message (11, 12, 14, 15, 41, 42) emanating from a subscriber module (SIM A), from the first voice cellular communication network (NV A), through a voice support node such as a mobile switch center node (MSC), comprised in the first voice cellular communication network (NV A),
- a second checker arrange to check for the reception of at least a second message (21, 22, 24, 25, 51, 52) emanating from said first subscriber module (SIM A), from the first data cellular communication network (ND A), through a data support node, such as a serving GPRS support node (SGSN), comprised in the first data cellular communication network (ND A),
the device (100) being configured to detect that said first subscriber module (SIM A):
- is:selected for data cellular communication network access in the first data cellular communication network (ND A) if a second message is received either before the reception of said first message or after the reception of said first message but not later than a predetermined time duration after the reception of said first message, and
- is not being selected for data cellular communication network access in the first data cellular communication network (ND A) if no second message is received before the expiration of said predetermined time duration.
